(19) Europäisches Patentamt
European Patent Office
Office européen des brevets

(11) Veröffentlichungsnummer: **0 290 742 A1**

(12) **EUROPÄISCHE PATENTANMELDUNG**

(21) Anmeldenummer: **88103944.0**

(51) Int. Cl.4: **C12G 3/06**

(22) Anmeldetag: **12.03.88**

(30) Priorität: **16.03.87 DE 3708477**
**26.10.87 DE 3736138**

(43) Veröffentlichungstag der Anmeldung:
**17.11.88 Patentblatt 88/46**

(84) Benannte Vertragsstaaten:
**AT BE CH DE ES FR GB IT LI SE**

(71) Anmelder: **Petershans, Horst**
**Schillerstrasse 160**
**D-7050 Bittenfeld(DE)**

(72) Erfinder: **Petershans, Horst**
**Schillerstrasse 160**
**D-7050 Bittenfeld(DE)**

(74) Vertreter: **Kinkelin, Ulrich, Dipl.-Ing.**
**Weimarer Strasse 32/34 Auf dem Goldberg**
**D-7032 Sindelfingen(DE)**

(54) **Weincooler.**

(57)

1. Weincooler sind im Prinzip altbekannte Bowlen. Die Mischung von Wein mit Fruchtsaft gibt ein frisch-fruchtiges Getränk mit einem Alkoholgehalt von etwa 6 %. Aber selbst dieser geringe Alkoholgehalt ist eine Barriere, z. B. bei Lebergeschädigten, ehemaligen Alkoholikern oder bei den Millionen Menschen, die aus religiösen Gründen keinen Alkohol konsumieren dürfen. Es wird also ein Weincooler erstrebt, der geschmacklich seinen Namen verdient, aber auch für die bisher ausgeklammerten Konsumenten tragbar wird.

2. Umdie bisherige Konsumbarriere zu überwinden, wird entalkoholisierter Wein als Coolerbasis verwendet, so daß auch im fertigen Weincooler kein Alkohol enthalten ist, der gewünschte Wein-Frucht-Geschmack aber vorliegt.

3 Erfrischungsgetränk

EP 0 290 742 A1

Xerox Copy Centre

# WEINCOOLER

Die Erfindung betrifft einen Weincooler gemäß dem Oberbegriff des Hauptanspruchs.

Gemäß der BGH-Entscheidung "Suppenrezept" sind Rezepte schutzfähig.

Weincooler werden seit längerer Zeit von einer größeren Anzahl von Firmen hergestellt. Zum Beispiel stellt die Steinheimer GmbH unter dem Warenzeichen Scaja etwa 7 millionen Flaschen, die Residenzkellerei unter dem Warenzeichen Caprice etwa 4 millionen Flaschen, die Firma Eckes unter dem Warenzeichen Criss etwa 3,5 millionen Flaschen her. Weitere Firmen mit etwas niedrigeren Umsätzen sind die St. Ursula Kellerei Bingen, die Drahten-Kellerei St.Aldegund, die Firma Carstens, die Firma Mertes Bernkastel, die Firma Rheinberg Bingen, die Firma Schnauffer Calw, die Firma Reinig Edenkoben, die Firma Faber KG Trier, die Firma Dr. Demuth Katlenburg usw.

Diese Weincooler haben einen Alkoholgehalt von etwa 6 bis 7 %.

Der Alkohol richtet - wie seit langem bekannt ist - sehr viele Schäden an und zwar sowohl gesundheitliche als auch rein wirtschaftliche. Zum Beispiel hat eine mittlere Großstadt wie Stuttgart in einem Jahr fast 1000 Unfälle wegen Alkohols. Ferner sterben in Ländern, in denen traditionell Wein angebaut wird eine größere Anzahl an Leberleiden. Zum Beispiel starben 1980 in Italien 34,3 und in Frankreich 27,6 von 100 000 Einwohnern an Leberleiden.

Seit längerer Zeit weiß man auch, warum Menschen, die sowohl Rauchen als auch Alkohol trinken statistisch gesehen wesentlich mehr an Krebs sterben als solche, die lediglich Alkohol trinken oder lediglich Rauchen: Der Alkohol dient als Lösungs-und Transportmittel für die Schadstoffe aus der Zigarette wie z.B. die diversen Teerstoffe, die Nitrosamine usw.

Natürlich sind diese Gesundheitsschäden am Ende auch wirschaftliche Schäden. Die rein wirtschaftlichen Schäden liegen darin, daß zum einen Überproduktion an Wein herrscht und diese Überproduktion an sich schon subventioniert wird und daß danach z.B. 1983 zwischen 15 und 20 millionen Hektoliter Wein mit einem Kostenaufwand von über 1 milliarde Mark zu Industriealkohol verarbeitet wurden, obwohl dieser mit 10% dieser Kosten auch synthetisch hergestellt werden könnte. Diese vielen Milliarden fehlen dann an anderer Stelle.

Einige Religionen, wie z.B. die islamische verbieten Alkohol grundsätzlich, so daß es grundsätzlich nicht möglich ist, in diese Länder den "überschüssigen" Wein zu exportieren.

Mit ebenfalls hohem Kostenaufwand und staatlich gefördert wird versucht, entalkoholisierten Wein herzustellen. Die bislang auf dem Markt befindlichen entalkoholisierten Wein sind jedoch nicht trinkbar weil sie abscheulich schmecken, sei es, daß sie durch Osmose gewonnen werden, sei es daß sie durch Destillation gewonnen werden. Auf dem Markt ist es bislang nicht gelungen einen solchen Wein gewinnbringend zu vertreiben. An sich wäre eine große Aufnahmefähigkeit des Marktes vorhanden, z.B. wurde in den Autobahnraststätten der Schweiz über einige Zeit hinweg alkoholfreier Wein angeboten, der sich jedoch überhaupt nicht durchsetzen konnte. Wegen des Geschmacksbuketts und des Duftbuketts ist Wein wesentlich schlechter zu entalkoholisieren, wie dies bei Bier der Fall ist. Für die meisten ist entalkoholisiertes Bier von alkoholhaltigem Bier nicht zu unterscheiden.

Aufgabe der Erfindung ist es, einen Weincooler der eingangs genannten Art anzugeben, der sowohl schmeckt als auch duftet als auch farblich in Ordnung ist als auch gestattet, die zu verspritenden Weinmengen niedriger zu machen als auch in religiöser und gesundheitlicher Richtung unbedenklich ist und man somit in der Lage ist, den Subventionsberg etwas abzubauen ohne selbst wieder subventioniert werden zu müssen.

Erfindungsgemäß wird dies durch die kennzeichnenden Merkmale des Hauptanspruchs gelöst.

Offensichtlich lag diese Lösung nicht nahe nachdem zwar einerseits Weincooler ein außerordentlich gutes Geschäft geworden sind, andererseits die Hersteller von entalkoholisiertem Wein aber keinerlei Marktchance haben und zum Dritten die Wirkung des Alkohols in religiöser und gesundheitlicher Richtung bekannt war.

Hinsichtlich des Oberbegriffs des Hauptanspruchs ist zu sagen, daß keinesfalls sicher ist, ob die bekannten Weincooler überhaupt unter Verwendung von Wein hergestellt werden. Der Anmelder kennt kein Verfahren, das die Unterscheidung ermöglichen würde, ob der Coolergrundstoff mit Wein vermischt wurde oder aber ob er mit entmineralisiertem Wasser vermischt wurde, dem mehr oder weniger reiner Alkohol zugesetzt worden ist. In diesem Fall würden die bekannten Weincooler nicht einmal die Bedingungen erfüllen, den Weinüberschuß etwas abzubauen.

Durch die Merkmale des Anspruchs 2 erreicht man einen entalkoholisierten Wein, dem ein überdurchschnittlich intaktes Geschmacks-und Geruchsverhalten belassen wurde. Verwendet werden können Verfahren wie sie z.B. in der DE-PS 3 77 406 beschrieben sind oder ein Verfahren wie es in der europäischen Patentanmeldung 58634 beschrieben wurde oder noch besser wie es in der veröffentlichten Patentanmeldung P 36 17 654.0 beschrieben worden ist.

Nach der heutigen Technik kann man auch sich des Rezeptschrittes nach dem Anspruch 3 bedienen. Nur erhält man nach dem jetzigen Stand der Technik hier zum einen sehr geringe Weinmengen und zum anderen Weinmengen, die geschmacklich weniger zufriedenstellend sind als die nach dem Anspruch 2.

Durch die Merkmale des Anspruchs 4 erreicht man, daß die fruchtfleischhaltigen Fruchsäfte oder Fruchtauszüge nicht zu Klümpchen führen. Der Gerbstoff würde bewirken, daß mit ihm zusammen das Fruchtfleisch zusammenklumpt und ausflockt. Den niedrigen Gerbstoffgehalt kann man z.B. dadurch erzielen, indem man Gelatine zusetzt, daß der Gerbstoffgehalt praktisch Null wird oder man kann die praktisch molekularen Gerbstoff-Filter (Filter für Polyphenole) verwenden.

Durch die Merkmale des Anspruchs 5 erreicht man, daß man das Produkt einen bestimmten guten Geschmack und Geruch hat und außerdem erreicht man, daß nicht mehr so viele Äpfel vernichtet werden müssen.

Durch die Merkmale des Anspruchs 6 erreicht man, daß das Produkt einen gegenüber Anspruch 5 ein wenig anderen, ebenfalls guten Geschmack und Geruch hat und daß nicht mehr so viel Alkohol besitzender Wein verspritet werden muß.

Durch die Merkmale des Anspruchs 7 erhält das Produkt ein in manchen Fällen gewünschtes Aussehen.

Dieser Rezeptschritt eignet sich z.B. für Birnen-Fruchtweincooler. Birnen haben an sich einen sehr hohen Gerbstoffgehalt und durch das Blankfiltrieren wird der Gerbstoffgehalt soweit heruntergesetzt, daß er beim Verzehr als angenehm empfunden wird. Jedoch bleibt dabei der fruchttypische Geschmack erhalten.

Durch den Rezeptschritt nach dem Anspruch 8 wird das Produkt bekömmlicher und man hat keinen schweren Kopf mehr.

Hinsichtlich des Anspruchs 9 gilt dies besonders für Sorbinsäure und verwandte Konservierungsmittel Sorobinsäure.

Durch die Merkmale des Anspruchs 10 erhält man Geschmacks-, Geruchs-, Bekömmlichkeits- und Verwertungsvorteile auch für Beeren.

Analoges gilt hinsichtlich des Anspruchs 11 für Birnen.

Durch die Merkmale des Anspruchs 12 erreicht man eine besonders gute Geschmacks-und Geruchsnote, die bei Vorgehensweisen gemäß Anspruch 2 aber auch 3 zu einem Produkt führt, das gerne gekauft wird obwohl vom ursprünglich alkoholhaltigen Wein her gesehen ein Teil der Aromastoffe beschnitten ist.

Analog gleiches gilt für die Merkmale gemäß Anspruch 13.

Durch die Merkmale des Anspruchs 14 erreicht man, daß das Produkt natürlich bleibt und vom Verkehr auch akzeptiert wird.

Durch die Merkmale des Anspruchs 15 erreicht man Ähnliches wie im Anspruch 14, kann jedoch zu einem billigeren Produkt kommen.

Es könnte nun sein, daß z.B. die seitherigen Weincooler-Hersteller sagen, der Alkoholgehalt sei gar nicht aus Genußgründen vorhanden sondern um das Produkt zu konservieren. Damit würden sie aber den Werbetexten auf ihren eigenen Flaschen widersprechen und außerdem zeigt die Erfindung, daß Alkohol zur Konservierung gar nicht notwendig ist.

Wenn hier von "entalkoholisiertem Wein" gesprochen wurde, dann natürlich in einem vernünftigen Sinne: Absolut alkoholfrei ist wohl kaum ein Produkt, das Zucker enthält. Dementsprechend ist auch Brot, Fruchtsaft, süße Früchte oder dergleichen stets mit Alkohol versetzt. Wann ein Wein als "alkoholarm" bezeichnet werden kann, ergibt sich zum Teil aus den nationalen Gesetzen, zum Teil aus der Verkehrsanschauung. Zum Beispiel ist nach dem deutschen Weingesetz ein Wein dann alkoholarm, wenn der Alkoholgehalt unter 5 Gramm/Liter Wein liegt. Unseres Wissens sind in Ländern mohammedanischen Glaubens die Weine dann alkoholarm, wenn der Anteil unter 2 Gramm/Liter liegt. Diese Bestimmungen müssen beachtet werden, wenn man die Erfindung ausübt.

Einem Alkoholcooler wird man in den allermeisten Fällen Zucker zusetzen. Trotzdem verwandelt sich dieser Zucker nicht in Alkohol.

Nachfolgend werden einige Rezepte erfindungsgemäßer Weincooler angegeben, bei denen auf 1000l mit der entsprechenden Menge entmineralisiertem Wasser aufgefüllt wird.

1. Orange-Maracuja-Kiwi-Apfelweincooler unter Verwendung von Orange-Maracuja-Kiwi-Cooler-Grundstoff mit einem Gewicht von 8 kg. Im Grundstoff sind 80% Orange, 10% Maracuja, und 10% Kiwi enthalten. Hinzukommen 51% Apfelwein und 6% Zuckerzusatz

2. Maracuja-Apfelwein-Cooler aus 7kg Maracuja-Fruchtsaftkonzentrat. Hinzukommen 51% Apfelwein und 6% Zuckerzusatz.

3. Johannisbeer-Apfelwein-Cooler aus 10 kg Johannisbeer-Grundstoff. Hinzukommen 60% Apfelwein und 8% Zuckerzusatz.

4. Orange-Zitrone-Apfelwein-Cooler
Es wird 12 kg Orange-Zitrone-Grundstoff verwendet, wobei der Anteil der Orange 70% und der Anteil Zitrone 30% ist. Hinzukommen 51% Apfelwein und 6% Zucker.

5. Zitrone-Grapefruit-Apfelwein-Cooler aus 18 kg Zitrone-Grapefruit-Grundstoff, wobei der Anteil der Zitrone 50% und der Anteil der Grapefruit ebenso hoch ist. Hinzukommen 51% Apfelwein und 6,5% Zucker.

6. Grapefruit-Zitrone-Apfelwein-Cooler aus 15 kg Grapefruit-Zitrone-Grundstoff. wobei 60% Grapefruit und 40% Zitrone verwendet werden. Hinzukommen 51% Apfelwein und 7% Zucker.

7. Bitter-Lemon-Apfelwein-Cooler aus 20 kg Bitter-Lemon-Konzentrat. Hinzukommen 51% Apfelwein und 7,5% Zucker.

8. Exotic-Cooler
15 kg Grundstoff aus Orange, Maracuja, Ananas, Zitrone, Guave (aufgezählt im Verhältnis kleiner werdenden Mengen). Hinzukommen 55% Wein und 7% Zucker.

9. Aricio-Weincooler
13 kg Grundstoff aus Mandarine, Papaya, Mango, Zitrone (aufgezählt mit absteigendem Anteil). Hinzukommen 50% Wein und 6% Zucker.

10. Williams-Birne
5 kg Williams-Birnen-Grundstoff mit Aromastoffen. Hinzukommen 90% Birnenmost (Wein) und 6% Zucker.

11. Pfirsich-Cooler
Rezepte siehe Seite 11

12. Maracuja-Cooler
analog Pfirsich-Cooler

13. 510 Liter alkoholfreie Weinbasis, hergestellt aus französischem Landwein mit mittlerem Gerbstoffgehalt, entalkoholisiert auf 0,3 % Vol. Alkohol. 20 Liter Sangria-Grundstoff (Orange, Zitrone, Limette), 45 kg Zucker oder Süßstoff, 400 g Vitamin C, 5 kg Kohlensäure, 470 Liter Wasser ergibt 1000 Liter vollen, harmonischen alkoholfreien Sangria, das als breites Volksgetränk von jedem Laien erkannt wird.

14. 510 Liter entalkoholisierte Grundlage wie unter Beispiel 13 beschrieben, jedoch unter Verwendung eines italienischen Weißweins. 40 kg Grundstoff-Konzentrat, hergestellt aus exotischen Früchten wie z.B. Orange, Ananas, Maracuja, Papaya, Guava, Kiwi, Aprikose, Mango, Banane, Zitrone und Mandarine trüb mit Fruchtfleisch, 50 kg Zucker oder Süßstoff, 400 g Vitamin C, 450 Liter Wasser, 5 kg Kohlensäure
ergibt einen fruchtigen, erfrischenden Frucht-Cooler der in Nichts einem Multi-Vitamin-Nektar vom Geschmack her nachsteht, jedoch wesentlich gehaltvoller ist durch die Weingrundlage und den darin enthaltenen Mineralien und der nur die Hälfte der Kalorien hat wie ein Vitaminnektar.

15. 550 Liter entalkoholisierte Weingrundlage unter Verwendung von italienischem oder französischem Weißwein, 20 kg Pfirsich-Konzentrat, 45 kg Zucker oder Süßstoff, 100 g Vitamin C, 5 kg Kohlensäure, 470 Liter Wasser ergibt einen alkoholfreien Pfirsich-Cooler, der einer duftenden Pfirsich-Bowle - außer im Alkoholgehalt - in Nichts nachsteht.

16. 510 Liter entalkoholisierte Weingrundlage unter Verwendung von italienischem Weißwein. 30 kg blanker Grundstoff aus Orange, Ananas, Apfel, Maracuja Papaya, Guave, Kiwi, Aprikose, Mango, Banane, Zitrone, Mandarine, 45 kg Zucker oder Süßstoff, 100 g Vitamin C, 5 kg Kohlensäure, 460 Liter Wasser ergibt einen klaren Mehrfrucht-Cooler, gehaltvoll, jedoch ohne Alkohlanteil.

17. 900 Liter entalkoholisierte Weingrundlage unter Verwendung eines Rotweins 70 Liter Glühwein-Grundstoff aus Nelken, Zimt, Heidelbeer, Orangen, Johannisbeere, Kräuter, Aromakomponente, 50 kg Zucker oder Süßstoff, 100 g Vitamin C, ohne Kohlensäure
ergibt 1000 Liter alkoholfreien Cooler-Glühwein

Es sei noch darauf hingewiesen, daß man bei Erdbeercooler und Himbeercooler kein Maracuja verwendet.

Unter einem "marktfähigem" Weincooler wird ein Weincooler verstanden, der sowohl dem Preis nach als auch der Sensorik nach als auch der Lagerfähigkeit nach als auch der Farbe nach konkurrenzfähig in das zur Zeit existierende Getränkesortiment paßt.

A. Pfirsich-Maracuja-Kiwi-Apfelwein-Cooler unter Verwendung von Pfirsich-Maracuja-Kiwi-Cooler-Grundstoff mit einem Gewicht von 8 kg. Im Grundstoff sind 80 % Pfirsich, 10% Maracuja und 10 % Kiwi enthalten. Hinzukommen 51 % Apfelwein und 6 % Zuckerzusatz.

B. Pfirsich-Zitrone-Apfelwein-Cooler
Es wird 12 kg Pfirsich-Zitrone-Grundstoff verwendet, wobei der Anteil des Pfirsichs 70 % und der Anteil Zitrone 30 % ist. Hinzukommen 51 % Apfelwein und 6 % Zucker.

C. Orange-Pfirsich-Apfelwein-Cooler
Es wird 12 kg Orange-Pfirsich-Grundstoff verwendet, wobei der Anteil der Orange 70 % und der Anteil Pfirsich 30 % ist. Hinzukommen 51 % Apfelwein und 6 % Zucker.

D. Pfirsich-Grapefruit-Apfelwein-Cooler aus 18 kg Pfirsich-Grapefruit-Grundstoff, wobei der Anteil des Pfirsichs 50 % und der Anteil der Grapefruit ebenso hoch ist. Hinzukommen 51 % Apfelwein und 6,5 % Zucker.

E. Grapefruit-Pfirsich-Apfelwein-Cooler aus 15 kg Grapefruit-Pfirsich-Grundstoff, wobei 60 % Grapefruit und 40 % Pfirsich verwendet werden. Hinzukommen 51 % Apfelwein und 7 % Zucker.

F. Exotic-Cooler
15 kg Grundstoff aus Orange, Maracuja, Ananas, Pfirsich, Guava (aufgezählt im Verhältnis kleiner werdender Mengen). Hinzukommen 55 % Wein und 7 % Zucker.

G. Aricio-Weincooler
13 kg Grundstoff aus Mandarine, Papaja, Mango, Pfirsich (aufgezählt mit absteigendem Anteil). Hinzukommen 50 % Wein und 6 % Zucker.

## Ansprüche

1. Marktfähiger Weincooler unter Verwendung von Wein und Cooler-Grundstoff, wobei der Weincooler mit Kohlensäure versetzt ist, dadurch gekennzeichnet, daß der Wein entalkoholisierter Wein ist und der Cooler-Grundstoff den Geschmack und/oder Geruch bestimmt.

2. Weincooler nach Anspruch 1, dadurch gekennzeichnet, daß der Wein durch ein Abdampfverfahren hergestellt wurde.

3. Weincooler nach Anspruch 1, dadurch gekennzeichnet, daß der Wein durch ein Osmoseverfahren insbesondere Umkehrosmoseverfahren hergestellt wurde.

4. Weincooler nach Anspruch 1, dadurch gekennzeichnet, daß der Wein einen sehr niedrigen Gerbstoffgehalt hat.

5. Weincooler nach Anspruch 1, dadurch gekennzeichnet, daß der Wein ein Apfelwein ist.

6. Weincooler nach Anspruch 1, dadurch gekennzeichnet, daß der Wein ein Traubenwein ist.

7. Weincooler nach Anspruch 1, dadurch gekennzeichnet, daß das Wein/Cooler-grundstoffgemisch blank filtriert ist.

8. Weincooler nach Anspruch 1, dadurch gekennzeichnet, daß er Konservierungsmittelfrei ist.

9. Weincooler nach Anspruch 8, dadurch gekennzeichnet, daß er ohne Sorbinsäure-artige Konservierungsmittel ist.

10. Weincooler nach Anspruch 1, dadurch gekennzeichnet, daß der Wein ein Beerenwein ist.

11. Weincooler nach Anspruch 1, dadurch gekennzeichnet, daß der Wein ein Birnenwein ist.

12. Weincooler nach Anspruch 1, dadurch gekennzeichnet, daß der Hauptaromaträger des Cooler-Grundstoffes Maracuja ist.

13. Weincooler nach den Ansprüchen 1 und 12, dadurch gekennzeichnet, daß der Cooler-Grundstoff Orange und Maracuja enthält.

14. Weincooler nach Anspruch 1, dadurch gekennzeichnet, daß der Cooler-Grundstoff ein Fruchtsaftkonzentrat ist.

15. Weincooler nach Anspruch 1, dadurch gekennzeichnet, daß der Cooler-Grundstoff ein synthetisch hergestelltes Aromakonzentrat ist.

16. Weincooler nach Anspruch 1, dadurch gekennzeichnet, daß der Anteil an entalkoholisiertem Wein im Bereich von 30 bis 95%, vorzugsweise 40 - 60%, insbesondere um 50% liegt.

17. Weincooler nach Anspruch 1, dadurch gekennzeichnet, daß weniger als 10% Zucker zugesetzt ist, vorzugsweise um 6% Zucker zugesetzt ist.

18. Weincooler nach Anspruch 1, dadurch gekennzeichnet, daß das Wein/Cooler-grundstoffgemisch unfiltriert bleibt und naturtrübe ist.

19. Weincooler nach Anspruch 1, dadurch gekennzeichnet, daß der Hauptaromaträger des Cooler-Grundstoffes Ananas ist.

20. Weincooler nach Anspruch 1, dadurch gekennzeichnet, daß der Hauptaromaträger des Cooler-Grundstoffes Mandarine ist.

21. Weincooler nach Anspruch 1, dadurch gekennzeichnet, daß der Hauptaromaträger des Cooler-Grundstoffes Zitrone ist.

22. Weincooler nach Anspruch 1, dadurch gekennzeichnet, daß als Diätgetränk nur Süßstoff und kein Zucker zugefügt ist.

23. Weincooler nach Anspruch 2, dadurch gekennzeichnet, daß das Abdampfverfahren demjenigen aus der DE-OS 3 617 654 gleich oder äquivalent ist.

24. Weincooler nach Anspruch 1, dadurch gekennzeichnet, daß der Hauptaromaträger Pfirsich ist.

25. Verfahren zur Herstellung eines Weincoolers nach einem oder mehreren der vorstehenden Ansprüche.

26. Verfahren nach einem der Rezepte 1 bis 12.

Europäisches Patentamt

# EUROPÄISCHER RECHERCHENBERICHT

Nummer der Anmeldung

EP 88 10 3944

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | FR-A-2 599 047 (HORST PETERSHANS)<br>* Zusammenfassung; Ansprüche 1,9-12 * | 1-9,14-18,22,23,25,26 | C 12 G 3/06 |
| Y | WO-A-8 703 902 (F.C. MIGROS)<br>* Zusammenfassung; Seite 11, Zeilen 1-9; Ansprüche 1,6 * | 1-9,14-18,22,23,25,26 | |
| Y | CA-A- 979 829 (GENERAL FOODS CORP.)<br>* Seite 2, Zeilen 13-33; Seite 3, Zeile 28 - Seite 4, Zeile 5; Beispiel; Ansprüche 1-6 * | 1-9,14-18,22,23,25,26 | |
| A | VOEDINGS MIDDELEN TECHNOLOGIE, Band 19, Nr. 12, Juni 1986, Seiten 17-19, Rijswijk, NL; Y. BOTMA: "Wine coolers"<br>* Seite 17, Spalte 2, Zeilen 6-11 * | 1 | |
| A | FR-A-2 256 244 (THUMM)<br>* Ansprüche 1,10; Seite 8, Zeilen 1-6; Seite 4, Zeilen 2-4 * | 1,2,6,8,14 | **RECHERCHIERTE SACHGEBIETE (Int. Cl.4)**<br>C 12 G |

Der vorliegende Recherchenbericht wurde für alle Patentansprüche erstellt

| Recherchenort | Abschlußdatum der Recherche | Prüfer |
|---|---|---|
| DEN HAAG | 13-07-1988 | EPAILLARD P.J.H.M. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)